## Europäisches Patentamt
## European Patent Office
## Office européen des brevets

(19)

(11) **EP 1 043 899 A1**

(12) **EUROPÄISCHE PATENTANMELDUNG**

(43) Veröffentlichungstag:
**11.10.2000   Patentblatt 2000/41**

(51) Int Cl.⁷: **H04N 9/31**, G02B 6/04

(21) Anmeldenummer: **99106788.5**

(22) Anmeldetag: **06.04.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Raytheon Marine GmbH**
**24106 Kiel (DE)**

(72) Erfinder: **Baumann, Hans Dr. Dipl.-Phys.**
**24223 Raisdorf (DE)**

(74) Vertreter: **Winkler, Andreas, Dr.**
**FORRESTER & BOEHMERT**
**Franz-Joseph-Strasse 38**
**80801 München (DE)**

(54) **Licht-Querschnittswandler**

(57)   Die Erfindung bezieht sich auf einen Licht-Querschnittswandler. Ein Bündel von lichtleitenden Einzelfasern (104) wird von bestimmten Punkten der Eintrittsfläche (102) zu bestimmten Punkten einer unterschiedlichen Querschnitt aufweisenden Austrittsfläche (112) derart geführt, daß eine gleichförmige Verteilung an der Austrittsfläche entsteht und der Lichtwirkungsgrad durch möglichst weitgehende Erfassung des von der Lichtquelle erzeugten Lichtstrahles (15) und damit die Leuchtdichte im gesamten Bereich erhöht wird.

FIG.3

**Beschreibung**

Die Erfindung bezieht sich auf einen Licht-Querschnittswandler gemäß dem Oberbegriff des Anspruches 1. Licht-Querschnittswandler, die auch als Kondensor bezeichnet werden, sind in der Regel eine optische Einrichtung zur Beleuchtung einer Bildvorlage beim Bildwerfer wie einem Diaprojektor oder einem Overheadprojektor. Der Kondensor soll das von einer Lichtquelle ausgehende Licht möglichst vollständig erfassen und so lenken, daß es möglichst verlustlos die Bildvorlage und das abbildende Objektiv erfaßt.

Ein herkömmlicher Linsenkondensor besteht aus einem System von Sammellinsen mit lampenseitigen Winkeln von 40° bis 60°. Er wird speziell bei Kinoprojektoren eingesetzt. Lichtquelle, Bildvorlage und Objektiv befinden sich dabei auf der geraden optischen Achse eines lichtreflektieren Hohlspiegels.

Der Kondensor soll den Lichtwirkungsgrad des optischen Systems erhöhen, der als das Verhältnis des von der Lichtquelle erzeugten Lichtstromes zur tatsächlichen Bildleuchtdichte auf der Leinwand beziehungsweise dem Bildschirm definiert ist.

Der vorher beschriebene Kondensor hat eine rotationssymmetrische Leuchtdichteverteilung, wogegen die Bildvorlage in der Regel ein rechteckiges Format hat, wie beispielsweise ein Dia, ein Filmbild, ein LCD-Schirm, oder Reflektionsspiegel-Systeme, das sind digitale Spiegelprojektoren, die mit DMD nach dem englischen Ausdruck Digital Mirror Device abgekürzt sind. Das unterschiedliche Format führt zu einem deutlichen Lichtverlust.

Durch Verwendung von einer oder von zwei quer zum Strahlengang und senkrecht zueinander in den Strahlengang eingebrachten Halbzylinderlinsen läßt sich ein rotationssymmetrischer Strahlengang annähernd in einen rechteckigen Strahlengang verwandeln. Hierbei wird jedoch die Lichtintensität im Mittenbereich nicht erhöht, wegen Linsenverlusten wird die Gesamt-Leuchtdichte sogar etwas verringert. Eine weitere Möglichkeit der Querschnitts-Wandlung ist im US-Patent 5829854 beschrieben. Hierbei wird das von einer Lichtquelle erzeugte Licht über eine Linse auf den Eingang eines Querschnittswandlers fokussiert, der mit Hilfe von mehreren hintereinander geschalteten Hilfslinsen eine rechteckige Ausgangsstrahlung erzeugt. Diese Anordnung bedingt einen verhältnismäßig hohen Lichtverlust und soll in erster Linie einer gleichmäßigen Ausleuchtung dienen. Hierbei ist ein höchstens gleich großer Eintrittsquerschnitt wie Austrittsquerschnitt vorgesehen. Der gleichmäßigste Leuchtdichtebereich im Mittenbereich wird auf das benötigte größere Ausgangsformat aufgeweitet. Dieser Wandler ist aus einem einzigen Stück und hat reflektierende Außenflächen. Die Einkopplung des in diesem Querschnittswandler erzeugten Lichtes ist ungünstig, der Lichtverlust ist hoch, daß austretende Licht weist eine hohe Divergenz auf.

Der Erfindung liegt die Aufgabe zugrunde, einen Licht-Querschnittswandler gemäß dem Oberbegriff des Anspruches 1 so auszugestalten, daß der Lichtwirkungsgrad durch möglichst weitgehende Erfassung des von der Lichtquelle erzeugten Lichtstrahles und damit die Leuchtdichte im gesamten Bereich der Bildvorlage erhöht wird.

Die Aufgabe wird durch die Merkmale des Anspruches 1 gelöst. Weitere Ausgestaltungen der Erfindung sind in den Unteransprüchen unter Schutz gestellt.

Beim Erfindungsgegenstand wird ein Bündel von lichtleitenden Fasern von der Eintrittsfläche eines Licht-Querschnittswandlers, allgemein auch als Kondensor bezeichnet, zur Austrittsfläche gelenkt. In der Regel ist hierbei eine Umwandlung des Gesamt-Lichtstrahles von einem rotationssymmetrischen kreisförmigen Eingangsquerschnitt, wie er von einer üblichen Lichtquelle erzeugt wird, zu einem rechteckigen Querschnitt, wie er einer Üblichen Bildvorlage, wie einem Dia, einem Kinofilm etc. entspricht, vorgesehen. Der Eintrittsquerschnitt kann hierbei gleich, kleiner oder auch größer als der Ausgangsquerschnitt sein. Ein begrenzter Randabfall der Helligkeit kann hierbei akzeptiert werden.

Die Eintrittsfläche des Licht-Querschnittswandlers ist in der Regel kreisförmig und vorzugsweise geringfügig kleiner im Durchmesser als der auffallende Lichtstrahl, der auch als Sonnendurchmesser bezeichnet wird. Die Austrittsfläche des Lichtstrahles aus dem Licht-Querschnittswandler ist vorzugsweise rechteckig, entsprechend dem abzubildenen Bildformat. Die einzelnen lichtdurchlässigen Fasern, im allgemeinen Glasfasern, sind dicht gepackt und vorzugsweise an der Eintrittsfläche und an der Austrittsfläche miteinander verbunden, entweder verklebt oder vorzugsweise fest verschweißt. Die Fasern können auch derart gestreckt werden, daß beispielsweise die Eintrittsfläche, entsprechend einem größeren Sonnendurchmesser, größer ist als der rechteckige Austrittsquerschnitt des Querschnittswandlers, auch als Faserkondensor bezeichnet. Die einzelnen Fasern sind nämlich dann an der Austrittsfläche im Durchmesser verringert, wegen des gleichbleibenden Lichtdurchlasses wird dadurch die Lichtdichte pro Flächeneinheit an der Austrittsfläche erhöht.

Vorzugsweise wird ein derartiger Licht-Querschnittswandler in einem Projektor, wie einem Diaprojektor oder vorzugsweise einem Filmprojektor, eingesetzt. Hierbei reflektiert ein üblicher Hohlspiegel das von einer punktförmigen Lichtquelle erzeugte Licht, derart daß an der Eintrittsfläche des Licht-Querschnittswandlers oder Faserkondensors ein Lichtstrahl oder eine Sonne mit gleichmäßiger, hoher Leuchtdichte auftrifft. Hinter der Austrittsfläche des Licht-Querschnittswandlers, die ein rechteckiges Format entsprechend dem Bildformat beziehungsweise der Bildvorlage aufweist, ist zum Sammeln des divergierenden austretenden Lichtstrahles eine Sammellinse vorgesehen, die vorzugsweise direkt mit der Austrittsfläche verbunden ist.

Hinter der erwähnten Sammellinse ist eine übliche Umlaufblende angeordnet, die das erzeugte Licht im wesentlichen nur bei feststehender Bildvorlage, wie dahinter angeordneten stehendem Film, freigibt. Die Bildvorlage wird über eine übliche Projektionslinse zur Leinwand projiziert. Erwähnt sei, daß sämtliche Licht-Projektionseinrichtungen und andere beteiligten Elemente zentrisch zur optischen Achse angeordnet sind.

Statt einer Hintereinander-Anordnung an einer geraden, durchgehenden optischen Achse ist jedoch auch alternativ eine zur Projektionsachse seitliche Anordnung möglich. In diesem Falle sind die punktförmige Lichtquelle, der reflektierende Hohlspiegel und der Licht-Querschnittswandler seitlich zum eigentlichen Projektions-Strahlengang angeordnet. Das Licht wird über entsprechende abgewinkelte reflektierende Flächen, wie eine Kombination verschiedener Prismen, in den eigentlichen Projektions-Strahlengang eingeblendet. Eine geeignete Anwendung ist hierbei eine digitale Spiegelanordnung, die im Hinblick auf die englische Bezeichnung Digital Mirror Device üblicherweise mit DMD abgekürzt wird. Der Licht-Querschnittswandler wird zwischen der Lichtquelle, wie einen reflektierenden Hohlspiegel, und einem ersten Prismensystem angeordnet, das eine Umlenkung und eine erste Aufspaltung des Lichtes zur Erzeugung von Blaulicht bewirkt. Zwei weitere nachgeschaltete Prismensysteme erzeugen Grünlicht und Rotlicht. Jedes Prismensystem hat eine digitale Spiegelanordnung, bestehend aus einer großen Anzahl winziger Spiegel, die jeweils einem Pixel entsprechen können, und die in jeweils zwei Winkelstellungen steuerbar sind, nämlich in den Hauptstrahlengang des Projektionsobjektives hinein oder aus diesem heraus.

Der Licht-Querschnittswandler läßt sich durch seitliche Kühlanordnungen, wie einen Ventilator, kühlen, wobei die Kühlluft üblicherweise auf einen eventuell vorhandenen, dünnen Schutzüberzug für das aus Einzelfasern bestehende Glasfaserbündel oder direkt auf das Glasfaserbündel auftrifft. Durch bewußte Verlängerung des Licht-Querschnittswandlers einschließlich der Einzelfasern läßt sich diese Kühlfläche vergrößern und damit seine Temperaturbeständigkeit weiter erhöhen. Dadurch können weniger temperaturbeständige Materialien für den aus Einzelfaseren bestehenden Licht-Querschnittswandler eingesetzt werden. Vor allem kann man mit hohen Lampenleistungen arbeiten, bis etwa 7 KW bis 10 KW, die eine enorme Hitzeentwicklung zur Folge haben.

Ausführungsbeispiele sind in der Zeichnung dargestellt. Es zeigt:

Figur 1 das Verhältnis zwischen kreisförmigen einfallenden Lichtstrahlen und rechteckförmiger Bildvorlage, wenn diese gerade voll erfaßt ist,

Figur 2 eine schematische Seitenansicht eines Kinofilmprojektors,

Figur 3 die perspektivische schematische Darstellung von Eintrittsflächen-Bereich, Austrittsflächen-Bereich und Darstellung einer Einzelfaser,

Figur 4 die strahlenmäßige Zuordnung von Einfallstrahl, Ausfallstrahl und Totalreflexion innerhalb der Einzelfaser des Licht-Querschnittswandlers,

Figur 5a die Vorderansicht auf die rechteckige Austrittsfläche des Licht-Querschnittswandlers oder auf einen kleinen Ausschnitt hiervon mit Einzelfasern und Zwischenräumen,

Fig. 5b die Vorderansicht auf die rechteckige Austrittsfläche des Licht-Querschnittwandlers oder auf einen kleinen Ausschnitt hiervon mit einer bienenwabenförmigen Packung der Einzelfasern, praktisch ohne Zwischenräume,

Figur 6 die Seitenansicht auf einen Licht-Querschnittswandler mit integrierter Sammellinse an der Austrittsfläche,

Figur 7 die schematische Darstellung eines digitalen Spiegelprojektors von oben mit seitlich angeordneter Lichtquelle und nachgeordnetem seitlichen Licht-Querschnittswandler.

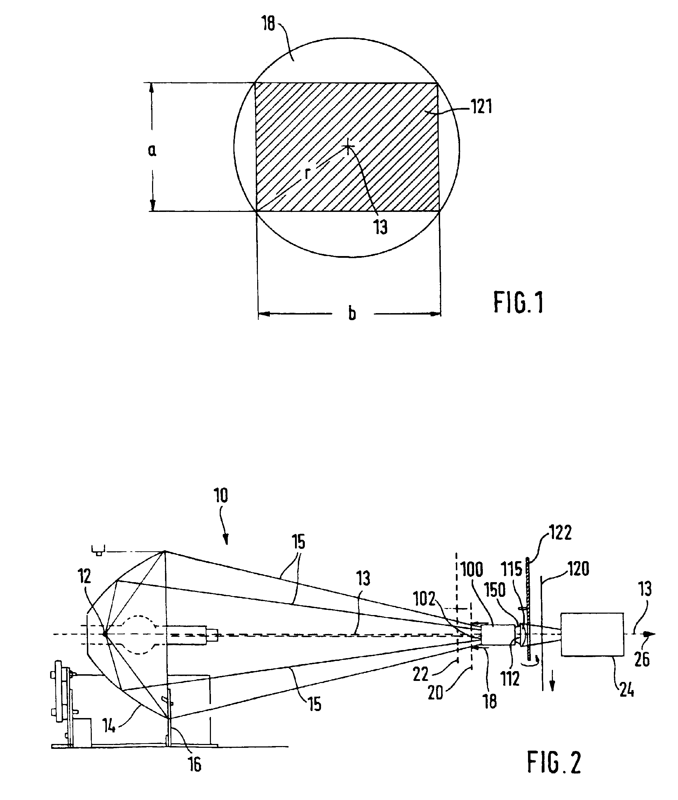

In Figur 1 ist der auf die Eintrittsfläche des Licht-Querschnittswandlers auftreffende Lichtstrahl, auch als Sonne bezeichnet, mit 18 bezeichnet. Die Bildvorlage ist mit 121 bezeichnet; sie entspricht der Austrittsfläche des Licht-Querschnittswandlers. Die optische Achse ist mit 13 bezeichnet.

Geht man davon aus, daß das, nicht den schraffierten Bereich der Bild-Vorlage treffende Licht verloren ist, so läßt sich durch nachfolgende Formel 1) unter Berücksichtigung der in Figur 1 dargestellten Abmessungen ein Wirkungsgrad ηLQW errechnen:

$$1) \qquad \eta_{LQ} = 4\,(a \times b)/\pi \times (a^2 + b^2)$$

Mit dem sich in Abhängigkeit des Formates ändernden Seitenverhältnisses a zu b, ändert sich auch dementsprechend der Wirkungsgrad. Die Verhältnisse werden exemplarisch für eine Filmprojektionseinrichtung dargestellt

Cinemascope (2,35) : a = 18,2      b = 21,3

$$\eta_{LQ} = 0,63$$

Breitbildverfahren (1,85): a 11,3; b = 20,9

$$\eta_{LQ} = 0,53$$

Breitbildverfahren(1,66): a =12,6; b=20,9

$$\eta_{LQ} = 0,56$$

Geht man von einer theoretisch gleichmäßigen Leuchtdichte über den Querschnitt aus, dann bedeutet das, daß je nach Format **47 % bis 37 %** des Lichtes verlorengehen.

Figur 2 zeigt schematisch einen allgemein mit 10 bezeichneten Kinofilmprojektor von der Seite. Der gerade optische Strahlengang beziehungsweise die optische Achse ist mit 13 bezeichnet, sämtliche Projektions-Elemente sind zu dieser optischen Achse 13 zentrisch und bis auf die Umlaufblende 122 und natürlich den senkrecht hierzu bewegten Film 120 rotationssymmetrisch angeordnet. Die punktförmige Lichtquelle 12 wird von einem Hohlspiegel 14, der über eine Haltevorrichtung 16 gehalten wird, als Lichtstrahl oder Sonne 18 zur Eingangsfläche 102 des Licht-Querschnittswandlers oder Faserkondensors 100 projiziert. Die Sonne 18 ist geringfügig größer als die Eintrittsfläche 102 des Faserkondensors 100. Die von der Austrittsfläche 112 des Faserkondensors 100 austretenden Lichtstrahlen 150 haben gegenüber den eintretenden Lichtstrahlen 15 einen doppelten Winkel. Um diese nicht vernachlässigbare Divergenz der austretenden Lichtstrahlen 150 zu kompensieren, ist hinter der Austrittsfläche 112 eine Sammellinse 115 vorgesehen. Das Licht wird dann durch eine übliche Umlaufblende 122 so lange unterbrochen, bis die Bildvorlage, wie jedes nacheinander projizierte Einzelbild eines schrittweise bewegten Filmes, im wesentlichen steht, somit für die Projektion bereit ist. Hinter der rotierenden Umlaufblende 122 ist der Film 120 dargestellt, der in Pfeilrichtung senkrecht zur optischen Achse 13 Bild für Bild bewegt wird. Das projizierte, die Bildvorlage wie das Einzelbild eines Filmes 120 durchdringende Licht wird über eine Projektionslinse 24 zur Projektionswand 26 projiziert. Während hierbei die Lichtquelle in das Projektionsobjektiv abgebildet wird, wird gleichzeitig das Bild des Filmes 122 vom Projektionsobjektiv auf die Projektionsleinwand 26 abgebildet. Gestrichelt ist die ohne Faserkondensor 100 übliche Lage der Umlaufblende 22 nebst Film 20 dargestellt.

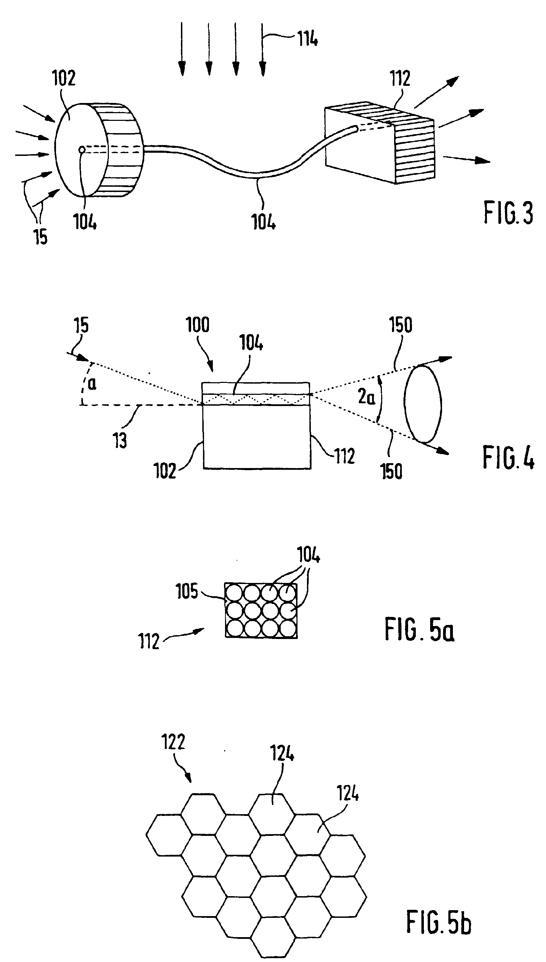

Figur 3 zeigt schmematisch die kreisrunde Eintrittsfläche 102 mit dem auftreffenden Lichtstrahl 15, die rechteckige Austrittsfläche 112 und dazwischen zur Veranschaulichung lediglich eine Einzelfaser 104. Seitlich ist mit 114 eine Kühleinrichtung wie ein Ventilator angedeutet, der kühlende Luft zum Licht-Querschnittswandler bläst. Eintrittsfläche und Austrittsfläche sind vorzugsweise zu einem Faserblock verschmolzen, die einzelnen Zwischenfasern können auch lose sein.

Figur 4 zeigt schematisch den Verlauf des einfallenden Lichtstrahles 15, der unter einem Winkel a zur optischen Achse 13 auf die Eintrittsfläche 102 des Licht-Querschnittswandlers 100 auftrifft, entlang den Einzelfasern 104 bis zur Austrittsfläche 112 geführt wird, und dort unter doppeltem Austrittswinkel 2a als Austritts-Lichtstrahl 150 austritt. Es wird gezeigt, daß der Austrittsquerschnitt jeder Einzelfaser 104 des bündelförmigen Lichtstrahles 150 kreisförmig ist, auch wenn der gesamte austretende Lichtstrahl eine andere Form aufweist, vorzugsweise entsprechend der Bildvorlage eine rechteckige. Der Licht-Querschnittswandler 100 kann von einem als Cladding bezeichneten dünnen Überzug mit höherem Brechnungsindex 106 eingefaßt sein, der innen reflektieren kann, um teilweise austretendes Licht aus den Einzelfasern 104 wieder zurück zu reflektieren.

Figur 5a zeigt die Draufsicht auf eine rechtekkige Austrittsfläche 112 oder ein kleines Teilstück derselben. Außer verschiedenen Einzelfasern 104 sind Zwischenräume 105 zu sehen. Die Einzelfasern sind in möglichst dichter Packung miteinander verbunden, wie gemäß Figur 5a miteinander verklebt.

Figur 5b zeigt eine bevorzugte Packung 122 aus Bienenwabenförmigen, sechseckigen Einzelfasern 124, die praktisch ohne Zwischenräume miteinander verbunden, vorzugsweise verschweißt beziehungsweise verschmolzen sind.

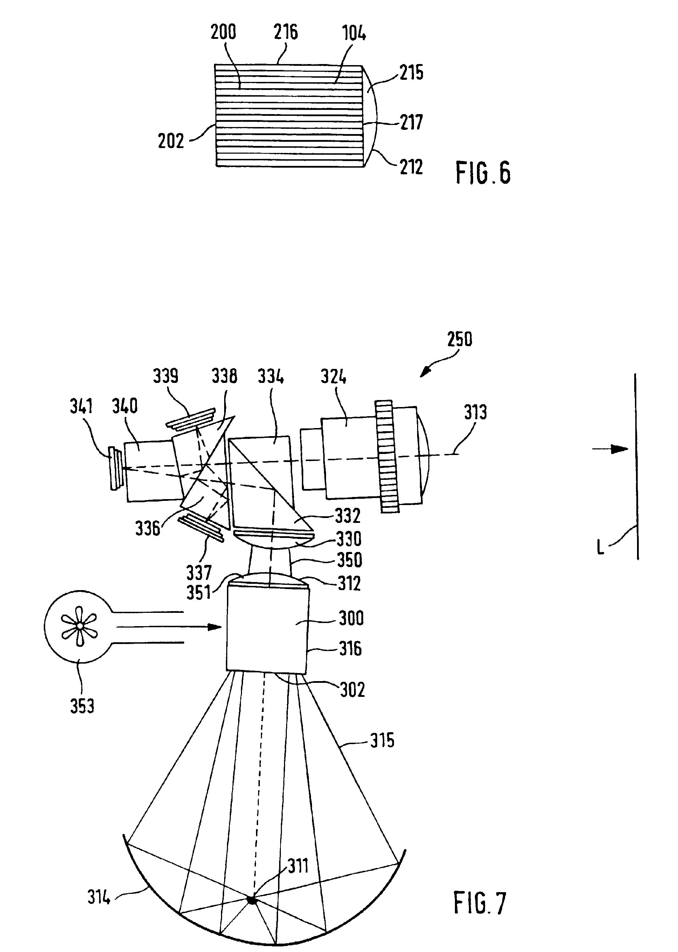

Figur 6 zeigt ein anderes Ausführungsbeispiel des Licht-Querschnittswandlers 200 mit Licht-Eintrittsfläche 202, Licht-Austrittsfläche 212 und dünnem Cladding-Überzug 216. Hierbei ist die nachfolgende Sammellinse 215 unmittelbar oder über eine dünne Zwischenschicht wie aus Kanada-Balsam, zum Ausgleich des unterschiedlichen Brechungsindexes mit der Licht-Austrittsfläche 212 verbunden.

Figur 7 zeigt ein anderes Ausführungsbeispiel der Erfindung, nämlich eine digitale Spiegelanordnung, abgekürzt DMD, häufig auch als Spiegelarray bezeichnet. Hier sind die punktförmige Lichtquelle 311 und der reflektierende Hohlspiegel 314 in Form eines Kaltlichtspiegels seitlich vom Haupt-Projektionsstrahlengang, dargestellt durch die Projektionsachse 313, angeordnet. Die vom Hohlspiegel 314 reflektierten Lichtstrahlen 315 treten in die Eintrittsfläche 302 des Licht-Querschnittswandlers 300 in Form eines Faserbündels mit Cladding-Überzug 316 ein und werden über die an der Austrittsfläche 312 vorgesehene Sammellinse 351 als Austritts-Lichtstrahlen 350 über eine Eintritts-Sammellinse 330 an ein mehrgliedriges Spiegelsystem beziehungsweise Prismensystem übertragen. Dieses besteht aus Einzelprismen 332, 334, 336, 338, 340, welche außer einer Umlenkung eine Aufspaltung des einfallenden Lichtes in die drei Grundfarben blau, grün, rot bewirkt. Jedem der Einzelprismen 336, 338, 340 ist ein DMD zugeordnet, nämlich das mit 337 bezeichnete DMD (b) für Blau, das mit 339 bezeichnete DMD (R) für Rot, und das mit 341 bezeichnete DMD (G) für Grün. Jedes dieser DMD'S oder digitalen Spiegelarrays besteht aus einer Vielzahl von Minispiegeln von etwa 16 um, die über Steuerungen getrennt in eine Richtung zum Hauptstrahlengang mit der Projektionsachse 313 zum Projektionsobjektiv 324 und zur Leinwand L, oder aus dem Strahlengang heraus, steuerbar sind. Die Steuerung der einzelnen Minispiegel jeder der drei Farben-Spiegelarrays erfolgt entsprechend der Bildvorlage.

Die Länge L des Licht-Querschnittswandlers 300 kann variiert werden, wobei selbstverständlich im wesentlichen die Länge der Einzelfasern variiert wird. Durch eine entsprechende gezielte Verlängerung kann die Kühlfläche vergrößert werden, sie bietet dem seitlich vom Licht-Querschnittswandler 300 angeordneten Ventilator 353 eine größere Angriffsfläche, so daß auch lichtempfindlichere Materialien für den Licht-Querschnittswandler oder Faserkondensor 300 eingesetzt werden können, und daß Lampen mit höherer Leistung eingesetzt werden können.

Das in Figur 7 dargestellte mikromechanische Spiegelgerät benötigt keine Umlaufblende, das Licht wird nur durch die Verlustfaktoren der einzelnen Prismen und die entsprechend gesteuerten Spiegelarrays geschwächt und trifft dann auf die Bildvorlage auf, wobei drei verschiedene Farben mit DMD R, DMD B und DMD G bezeichnet sind. Die Lampe (bis 10 KW) verursacht eine große Hitzeeinwirkung auf das optische System mit Prismen und DMD'S. Der seitlich angeordnete Querschnittswandler 300 kann diesem System Kaltlicht zuführen, begünstigt durch die Kühlung des Licht-Querschnittswandlers, und vorzugsweise durch eine vergrößerte Länge L desselben. Der Kühleffekt wird noch zusätzlich vergrößert, wenn man die Lichtleitfasern lediglich an einem Eintrittsbereich und einem Austrittsbereich miteinander verschmilzt und dazwischen einzeln verlaufen läßt, so daß mehr Kühlluft angreifen kann.

Vorliegende Untersuchungen und Berechnungen ergeben eine deutliche Verbesserung der effektiven Leuchtdichte durch den beschriebenen Licht-Querschnittswandler um etwa 35 Prozent. Der geringfügige Reflektionsverlust durch die nachgestellte erforderliche Sammellinse kann durch eine Breitbandentspiegelung und durch einen engen Kontakt zur Austrittsfläche des Licht-Querschnittswandlers weitestgehend vermieden werden.

**Patentansprüche**

1.  Licht-Querschnittswandler, mit einer Eintrittsfläche (102, 302) und einer Austrittsfläche (112, 312) für Licht, die unterschiedlichen Querschnitt aufweisen, gekennzeichnet durch ein Bündel von lichtleitenden Fasern (104, 124), die einzeln von bestimmten Punkten der Eintrittsfläche (102, 302) derart zu bestimmten Punkten der Austrittsfläche (112, 312) geführt sind, daß eine gleichförmige Lichtverteilung an der Austrittsfläche (112, 312) besteht.

2.  Licht-Querschnittswandler nach Anspruch 1, dadurch gekennzeichnet, daß Eintrittsfläche (102) und Austrittsfläche (112) die gleiche Querschnittsfläche aufweisen.

3.  Licht-Querschnittswandler nach Anspruch 1, dadurch gekennzeichnet, daß die Eintrittsfläche (102) eine größere Querschnittsfläche als die Austrittsfläche (112) aufweist.

4.  Licht-Querschnittswandler nach einem der Ansprüche 1 bis 3, dadurch gekennzeichnet, daß die Eintrittsfläche (102) kreisförmigen Querschnitt aufweist, entsprechend einer üblichen Lichtquelle (12 - 16), und daß die Austrittsfläche (112) rechteckigen Querschnitt aufweist, entsprechend einem üblichen Bildformat von Projektionsgeräten wie Filmprojektoren, Diaprojektoren, beziehungsweise dem entsprechenden Filmformat.

5.  Licht-Querschnittswandler nach einem der Ansprüche 1 bis 4, gekennzeichnet durch eine hinter der Austrittsfläche (112) angeordnete Sammellinse (115; 215; 315) zur Bündelung der in der Regel mit doppeltem Austrittswinkel (2a) aus der Austrittsfläche (112) austretenden Lichtstrahlen (150; 350), gegenüber den auf die Eintrittsfläche (112) unter dem einfachen Winkel (a) auftreffenden Lichtstrahlen (15; 315), wobei die Sammellinse (215, 351) direkt (oder über ein Zwischenmedium) wie Kanada-Balsam zum Ausgleich des Brechungsindex mit der Austrittsfläche (112) verbunden ist.

6.  Licht-Querschnittswandler nach einem der Ansprüche 1 bis 5, dadurch gekennzeichnet, daß die lichtleitenden Einzelfasern (104, 124) unter geringen Zwischenräumen (105) oder vorzugsweise praktisch ohne Zwischenräume bienenwabenförmig eng aneinandergrenzen, im Bereich der Eintrittsfläche (102) und der Austrittsfläche (112) fest miteinander verbunden, wie verklebt oder vorzugsweise miteinander verschweißt/verschmolzen sind, und daß sie von einem dünnen, als Cladding bezeichneten Überzug (106, 216, 316) mit höherem Brechnungsindex umhüllt sein können.

7.  Licht-Querschnittswandler nach einem der Ansprüche 1 bis 6, dadurch gekennzeichnet, daß er in einem Filmprojektor (10) vor dem quer hierzu transportierten lichttransparenten Film (120) eingesetzt ist.

8.  Licht-Querschnittswandler nach Anspruch 7, gekennzeichnet durch

    eine im wesentlichen punktförmige, in der optischen Achse (13) angeordnete Lichtquelle (12),
    einen reflektierenden Hohlspiegel (14) für den erzeugten Lichtstrahl (15),
    der unter einem bestimmten, als Sonne bezeichneten Strahlendurchmesser (18) und unter einem bestimmten Einfallswinkel (a) auf den, auch als Faser-Kondensor bezeichneten Licht-Querschnittswandler (100) auftrifft,

eine hinter der Austrittsfläche (112) des Licht-Querschnittswandlers (100) angeordnete Sammellinse (115; 215) für die unter dem doppelten Austrittswinkel (2a) austretenden Lichtstrahlen (150),

eine vor dem quer zur optischen Achse (13) transportierten Film (120) angeordnete Licht-Unterbrecherblende wie eine Umlaufblende (122),

ein Projektionsobjektiv (24) für die einzelnen Filmbilder.

**9.** Licht-Querschnittswandler nach einem der Ansprüche 1 bis 6, dadurch gekennzeichnet, daß er im Strahlengang nach einer seitlichen Lichtquelle (311, 314) angeordnet ist, daß der weiße Lichtstrahl (315) über drei hintereinander angeordnete Umlenkprismen (332, 334, 336) in drei Grundfarben (Blau, Grün, Rot) aufgespalten wird, wobei mit jedem Umlenkprisma eine als digitales Spiegelarray (337, 339, 341) bezeichnete Spiegelanordnung verbunden ist, die je aus einer Vielzahl von Minispiegeln (16 um Durchmesser, entsprechend einem Pixel) besteht, welche über eine Steuerung entsprechend der Bildvorlage einzeln in eine Stellung zur Reflexion in den optischen Projektionsstrahlengang mit Projektionsachse (313) oder in einen anderen Strahlengang wie eines Projektors, vorzugsweise eines digitalen Spiegelprojektors (250), hinein oder weg davon kippbar sind, wobei die Bildvorlage durch ein Projektionsobjektiv (324) zur Leinwand (L) projizierbar ist.

**10.** Licht-Querschnittswandler nach einem der Ansprüche 1 bis 9, gekennzeichnet durch eine seitliche Kühleinrichtung (114, 353) für den Licht-Querschnittswandler (100; 200; 300).

**11.** Licht-Querschnittswandler nach einem der Ansprüche 1 bis 10, gekennzeichnet durch eine Verlängerung des Licht-Querschnittswandlers (100; 200; 300) einschließlich der einzelnen Einzelfasern (104), um eine vergrößerte Kühlfläche für das seitliche Kühlmedium zu erhalten.

**12.** Licht-Querschnittswandler nach einem der Ansprüche 1 bis 11, gekennzeichnet durch unterschiedliche Abmessungen in Anpassung an den Einsatz in verschiedenen Geräten wie Filmprojektoren oder dem gleichen Gerät bei unterschiedlichen Bildformaten.

**13.** Licht-Querschnittswandler nach einem der Ansprüche 1 bis 12, gekennzeichnet durch im Querschnitt sich verjüngende Fasern (102), um eine Anpassung an den Durchmesser der Eintritts-Lichtstrahlen einerseits und an die Austrittsfläche (112, 212, 312) herzustellen.

FIG.1

FIG.2

FIG.3

FIG.4

FIG.5a

FIG.5b

200    216    104

215

217

202                        212    FIG.6

250

339  338  334  324

341  340                        313

332

336

330
350
337                      312
351
300
316
302

353

315

311

314                  FIG.7

L

**Europäisches Patentamt**

# EUROPÄISCHER RECHERCHENBERICHT

Nummer der Anmeldung

EP 99 10 6788

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN<br>vol. 97, no. 3, 31. März 1997 (1997-03-31)<br>& JP 08 314009 A (FUJITSU GENERAL LTD),<br>29. November 1996 (1996-11-29)<br>* Zusammenfassung * | 1,3,4,6,12 | H04N9/31<br>G02B6/04 |
| X | PATENT ABSTRACTS OF JAPAN<br>vol. 17, no. 290 (P-1549),<br>3. Juni 1993 (1993-06-03)<br>& JP 05 019356 A (SONY CORP),<br>29. Januar 1993 (1993-01-29)<br>* Zusammenfassung * | 1,3,4,6,12 | |
| X | PATENT ABSTRACTS OF JAPAN<br>vol. 15, no. 415 (P-1265),<br>22. Oktober 1991 (1991-10-22)<br>& JP 03 167520 A (PIONEER ELECTRON CORP),<br>19. Juli 1991 (1991-07-19)<br>* Zusammenfassung * | 1,2,4,6,12 | |
| X | PATENT ABSTRACTS OF JAPAN<br>vol. 16, no. 504 (P-1439),<br>19. Oktober 1992 (1992-10-19)<br>& JP 04 184384 A (AKUSESU KK),<br>1. Juli 1992 (1992-07-01)<br>* Zusammenfassung * | 1,2,6,10,12 | RECHERCHIERTE SACHGEBIETE (Int.Cl.7)<br><br>H04N<br>G02B<br>G09G |
| X | PATENT ABSTRACTS OF JAPAN<br>vol. 16, no. 543 (P-1451),<br>12. November 1992 (1992-11-12)<br>& JP 04 204883 A (SANYO ELECTRIC CO LTD)<br>* Zusammenfassung * | 1,2,6 | |
| X | US 5 302 999 A (OSHIDA & AL.)<br>12. April 1994 (1994-04-12)<br>* Zusammenfassung; Abbildungen 1-4,12 * | 1 | |

Der vorliegende Recherchenbericht wurde für alle Patentansprüche erstellt

| Recherchenort | Abschlußdatum der Recherche | Prüfer |
|---|---|---|
| DEN HAAG | 6. September 1999 | Pigniez, T |

## ANHANG ZUM EUROPÄISCHEN RECHERCHENBERICHT
## ÜBER DIE EUROPÄISCHE PATENTANMELDUNG NR.

EP 99 10 6788

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-1999

| Im Recherchenbericht angeführtes Patentdokument | | Datum der Veröffentlichung | Mitglied(er) der Patentfamilie | | Datum der Veröffentlichung |
|---|---|---|---|---|---|
| JP 08314009 | A | 29-11-1996 | KEINE | | |
| JP 05019356 | A | 29-01-1993 | KEINE | | |
| JP 03167520 | A | 19-07-1991 | KEINE | | |
| JP 04184384 | A | 01-07-1992 | KEINE | | |
| JP 04204883 | A | 27-07-1992 | KEINE | | |
| US 5302999 | A | 12-04-1994 | JP | 5217854 A | 27-08-1993 |
| | | | JP | 6029189 A | 04-02-1994 |
| | | | DE | 4301716 A | 05-08-1993 |

EPO FORM P0461

Für nähere Einzelheiten zu diesem Anhang : siehe Amtsblatt des Europäischen Patentamts, Nr.12/82